(19) Europäisches Patentamt / European Patent Office / Office européen des brevets

(11) **EP 3 256 409 B1**

(12) **FASCICULE DE BREVET EUROPEEN**

(45) Date de publication et mention
de la délivrance du brevet:
**15.04.2020 Bulletin 2020/16**

(21) Numéro de dépôt: **16707879.9**

(22) Date de dépôt: **08.02.2016**

(51) Int Cl.:
***B65G 65/00*** *(2006.01)*

(86) Numéro de dépôt international:
**PCT/FR2016/050267**

(87) Numéro de publication internationale:
**WO 2016/128662 (18.08.2016 Gazette 2016/33)**

(54) **PROCEDE ET SYSTEME DE DECHARGEMENT DE COLIS**

VERFAHREN UND SYSTEM ZUM ENTLADEN EINER VERPACKUNG

METHOD AND SYSTEM FOR UNLOADING A PACKAGE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.02.2015 FR 1551006**

(43) Date de publication de la demande:
**20.12.2017 Bulletin 2017/51**

(73) Titulaire: **SYLEPS
société anonyme à directoire et conseil
de surveillance
56100 Lorient (FR)**

(72) Inventeurs:
• **COURANT, Mathieu
56600 Lanester (FR)**
• **LE DU, Pierre
29300 Redene (FR)**

(74) Mandataire: **Lavoix
2, place d'Estienne d'Orves
75441 Paris Cedex 09 (FR)**

(56) Documents cités:
WO-A1-2010/089150       DE-U1- 9 211 139
US-A- 4 646 629       US-A1- 2004 193 311
US-A1- 2013 062 160

EP 3 256 409 B1

**Description**

La présente invention concerne un procédé de déchargement sur un poste d'évacuation, de colis préalablement disposés sur la face supérieure d'un plateau présentant des bords latéraux relevés.

Elle concerne également un système de déchargement de colis mettant en œuvre un tel procédé.

Elle trouve une application particulièrement importante bien que non exclusive dans le domaine des machines pour tri de colis permettant d'extraire automatiquement des charges de forme quelconque à partir d'un plateau sur lequel elles ont été placées au préalable.

Il est connu de stocker des charges sur des plateaux avant réarrangement de celles-ci sur une palette pour transfert vers un lieu de distribution, comme une grande surface par exemple.

Le stockage sur des plateaux facilite leur rangement ordonné sur des rayonnages et leur reprise en automatique pour traitement ultérieur.

De tels stockages sur plateaux présentent cependant un important inconvénient, à savoir celui du déchargement automatique à grande vitesse de tels plateaux.

On connaît par exemple (FR 2 567 425) des systèmes utilisés dans le domaine du tri postal mettant en œuvre des plateaux munis de raclette susceptible de se déplacer sur la surface du plateau pour repousser les colis vers un support de transport. Ils sont mécaniquement compliqués et ne permettent pas le transfert des colis sans risque de basculement.

On peut également citer le document DE 9 211 139 U qui décrit un système de déchargement avec des plateaux et un déflecteur mobile, grâce auquel les colis sont transférés sur un poste d'évacuation. Il présente les mêmes inconvénients.

Le document DE 9 211 139 U divulgue un procédé de déchargement sur un poste d'évacuation de colis préalablement déposés sur la face supérieure d'au moins un plateau présentant au moins un bord latéral, le procédé comportant les étapes suivantes: on place le plateau sur un convoyeur avec ledit bord latéral du côté du poste d'évacuation, on déplace le plateau devant le poste d'évacuation équipé d'un déflecteur mobile en forme de cornière présentant une aile inclinée vers le bas, on déplace ledit déflecteur et on pousse les colis latéralement sur le déflecteur jusqu'à complet transfert sur ledit poste d'évacuation.

Le document DE 9 211 139 U divulgue également un système de déchargement sur un poste d'évacuation de colis comprenant au moins un plateau comportant une face supérieure de support de colis et présentant au moins un bord latéral, le système comporte de plus un convoyeur agencé pour transférer le plateau avec son bord latéral situé du côté du poste d'évacuation vers une position en vis à vis dudit poste d'évacuation, un déflecteur mobile étant en forme de cornière présentant une aile inclinée vers le bas d'un angle, des moyens de déplacement de ladite cornière entre une position haute et une position basse et des moyens de poussée agencés pour pousser des colis latéralement sur le déflecteur jusqu'à complet transfert sur ledit poste d'évacuation.

On connaît aussi des systèmes mettant en œuvre des plateaux à trous au travers desquels on vient repousser les colis dans une position d'extraction Ici encore il est nécessaire de prévoir des moyens ajustés mécaniquement de façon précise, nécessitant des plateaux spécialement conçus avec un grand nombre de trous espacés régulièrement sur toute la surface du plateau, les trous étant ici conçus pour être traversés de façon escamotable par des plots permettant ainsi le soulèvement des colis situés au-dessus des trous et leur extraction.

De tels systèmes présentent plusieurs inconvénients notamment dès que les colis ne sont pas de forme régulière et/ou présentent une forme instable.

La présente invention vise à pallier ces inconvénients en proposant un procédé selon la revendication 1 et un système de déchargement selon la revenidcation 9 répondant mieux que ceux antérieurement connus aux exigences de la pratique, notamment en ce qu'elle autorise le déchargement de colis de formes multiples, non nécessairement parallélépipédiques, présentant un fond irrégulier non plan et/ou présentant un centre de gravité élevé générateur d'instabilité et ce avec des vitesses de traitement supérieures à 1 000 colis par heure.

Dans ce but l'invention propose un procédé de déchargement selon la revendication 1 sur un poste d'évacuation de colis préalablement déposés sur la face supérieure d'au moins un plateau présentant au moins un bord latéral relevé, caractérisé en ce le plateau comportant une rainure périphérique jouxtant ledit bord, on place le plateau sur un convoyeur avec ledit bord latéral du côté du poste d'évacuation, on règle la position relative des colis par rapport au plateau pour que les colis soient situés sur la face supérieure du plateau entièrement à l'extérieur de ladite rainure, on déplace le plateau devant le poste d'évacuation équipé à sa jonction avec le convoyeur d'un déflecteur mobile en forme de cornière présentant une aile inclinée vers le bas d'un angle α, ledit déflecteur étant en position haute permettant d'échapper le bord latéral du plateau, on déplace ledit déflecteur vers une position basse de sorte que l'arête de l'aile inclinée vienne s'encastrer dans ladite rainure en dessous de la face supérieure du plateau et on pousse les colis latéralement sur le déflecteur jusqu'à complet transfert sur ledit poste d'évacuation.

Le procédé et le système qu'il utilise permettent ainsi de prendre en charge des colis positionnés de manière quelconque sur le plateau, et ce indépendamment de leur instabilité.

La première opération que ce procédé met en œuvre est en effet de référencer en dynamique le plateau selon un guide opposé au sens d'évacuation. La position des colis étant incertaine, cette opération permet de les placer sur le plateau en garantissant l'absence d'interférence entre la charge et le dispositif déflecteur qui, après abaissement, autorise alors le déchargement des colis indépendamment de leur stabilité du fait notamment du poussage.

Dans des modes de réalisation avantageux, on a par ailleurs et/ou de plus recours à l'une et/ou à l'autre des dispositions suivantes :

- on décharge successivement plusieurs plateaux, le transfert des colis d'un premier plateau sur le poste d'évacuation s'effectuant pendant le règlement de la position relative des colis sur un deuxième plateau préalablement placé à la suite du premier sur le convoyeur et ainsi de suite pour les plateaux suivants ;
- pour régler la position relative des colis par rapport au plateau, le convoyeur étant équipé d'une butée située du côté du poste d'évacuation, on référencie en dynamique le plateau du côté opposé à la butée, pour garantir l'absence d'interférence entre les colis et ladite butée, et on repousse le plateau vers la butée par le biais d'un actionneur mécanique en extension jusqu'à une position finale déterminée, pour provoquer s'il y a lieu le glissement des colis sur le plateau occasionné par la mise en contact des colis avec la butée tout en garantissant ainsi un jeu longitudinal entre les colis et le bord latéral du plateau suffisant pour que lesdits colis soient entièrement situés à l'extérieur de la rainure en position finale ;
- on détecte la position finale déterminée du plateau, ladite détection provoquant le retrait de l'actionneur et le transfert du plateau en vis à vis du poste d'évacuation ;
- on déplace le déflecteur entre sa positon haute et sa position basse, et inversement, par un mouvement vertical complété par un mouvement initial et/ou final de basculement en rotation, de façon à réduire l'encombrement et permettre un dégagement accru de la cornière vis à vis du plateau et des colis qu'il supporte ;
- l'angle $\alpha$ est compris entre 140° et 170 ;
- l'angle $\alpha$ est de l'ordre de 150°;
- $d \geq h/tg\ \beta$, avec $\beta = 180° - \alpha$, $h$ étant la hauteur du bord par rapport à la face supérieure du plateau, et $d$ la largeur de la rainure périphérique.

L'invention propose également un système mettant en œuvre le procédé tel que décrit ci-avant.
Elle propose un système de déchargement selon la revendication 9 sur un poste d'évacuation de colis comprenant au moins un plateau comportant une face supérieure de support de colis et présentant au moins un bord latéral relevé, caractérisé
en ce que le plateau comporte une rainure périphérique de largeur $d$ et de profondeur $p$, jouxtant ledit bord,
en ce que le système comporte de plus
un convoyeur agencé pour transférer le plateau avec son bord latéral situé du côté du poste d'évacuation vers une position en vis à vis dudit poste d'évacuation,
des premiers moyens actionneurs du déplacement transversal du plateau en dynamique,
des moyens de butée latérale du plateau du côté du poste d'évacuation, les dits premiers moyens actionneurs et lesdits moyens de butée étant agencés pour régler la position relative des colis par rapport au plateau pour que les colis soient toujours situés sur la face supérieure du plateau entièrement à l'extérieur de ladite rainure,
ledit convoyeur étant agencé pour déplacer ensuite le plateau devant le poste d'évacuation,
un déflecteur mobile situé à la jonction entre le poste d'évacuation et le convoyeur, ledit réflecteur étant en forme de cornière présentant une aile inclinée vers le bas d'un angle $\alpha$,
des moyens de déplacement de ladite cornière entre une position haute permettant d'échapper le bord latéral du plateau, et une position basse agencés pour permettre l'encastrement de l'arête de l'aile inclinée dans ladite rainure en dessous de la face supérieure du plateau et des moyens de poussée agencés pour pousser les colis latéralement sur le déflecteur jusqu'à complet transfert sur ledit poste d'évacuation.
Pour ce faire les dimensions de la cornière et plus particulièrement de la largeur et de l'angle $\alpha$ de son aile inclinée par rapport à la ligne de jonction avec l'aile fixe de la cornière solidaire du poste d'évacuation, sont adaptées à la hauteur et la profondeur de la rainure de façon à la portée de l'homme du métier.
Avantageusement le système est caractérisé en ce que la butée est une plaque verticale rectangulaire fixe, de hauteur déterminée, de longueur égale ou sensiblement égale à celle du plateau, présentant un bord inférieur situé à une distance $e$, par rapport à la face supérieure du convoyeur, supérieure à la hauteur du plateau.
Dans un mode de réalisation avantageux les moyens de déplacement de la cornière entre sa positon haute et sa position basse comprennent des moyens d'actionnement vertical de la cornière et des moyens de basculement en rotation de ladite cornière (autour d'un axe parallèle au plateau, c'est à dire perpendiculaire au sens d'évacuation des colis), de façon à réduire l'encombrement et permettre un dégagement accru de la cornière vis à vis du plateau et des colis qu'il supporte.
Egalement avantageusement l'angle $\alpha$ est compris entre 140° et 170°, l'angle $\alpha$ étant par exemple égal ou de l'ordre de 150°, et/ou avec $d \geq h/tg\ (180° - \alpha)$.
Avantageusement le plateau est ajouré par des orifices régulièrement répartis, ce qui permet l'évacuation de l'eau et/ou des liquides qui seraient déversés sur les plateaux.
L'invention sera mieux comprise à la lecture des modes de réalisation décrits ci-après de façon non limitative en référence aux figures qui l'accompagnent et dans lesquelles :

Les figures 1A et 1B illustrent schématiquement les étapes du procédé de déchargement selon un mode de réalisation de l'invention.

Les figures 2A et 2B sont des vues en perspective de dessus et de dessous d'un mode de réalisation de plateau utilisable avec le procédé selon l'invention.

La figure 3 est une vue en plan par le dessous, du plateau de la figure 2B.

La figure 4 est la vue en coupe latérale selon IV-IV de la figure 3.

La figure 4A est un détail agrandi du bord du plateau de la figure 4, montrant la rainure.

La figure 5 est une vue latérale du plateau de la figure 2A.

La figure 6 est une vue en perspective d'un mode de réalisation du système de déchargement selon l'invention.

La figure 7 est une vue en coupe latérale selon VII-VII de la figure 6.

La figure 8 montre en perspective et schématiquement, un exemple d'agencement du système de la figure 6 avec les postes suivants de traitement de colis.

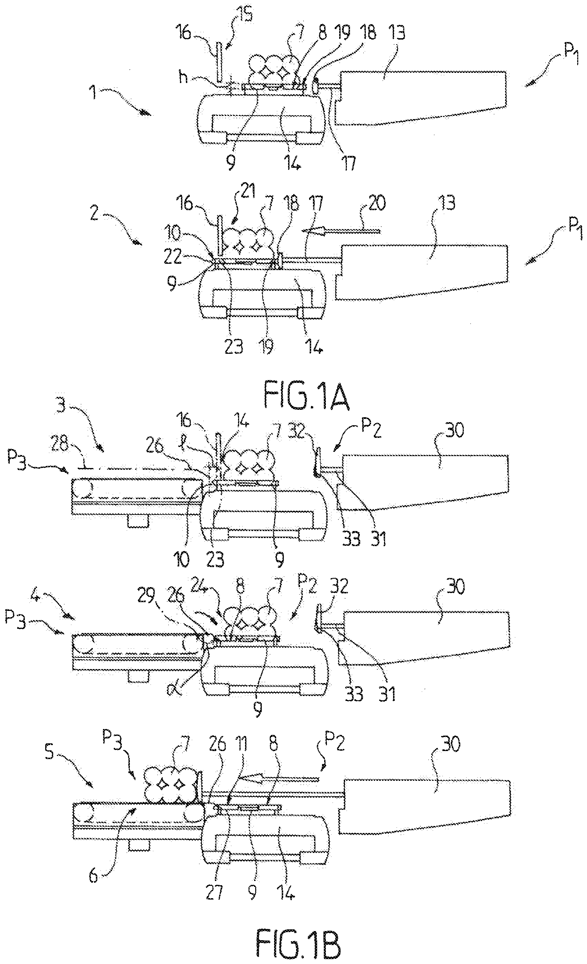

Les figures 1A à 1B montrent schématiquement les étapes référencées 1 à 5 du procédé de déchargement sur un poste d'évacuation 6, de colis 7 préalablement déposés sur la face supérieure 8 d'un plateau 9.

Le plateau 9 comporte quatre bords latéraux 10 relevés, présentant une hauteur $h$ par rapport à la face supérieure 8 par exemple $h = 2$ cm.

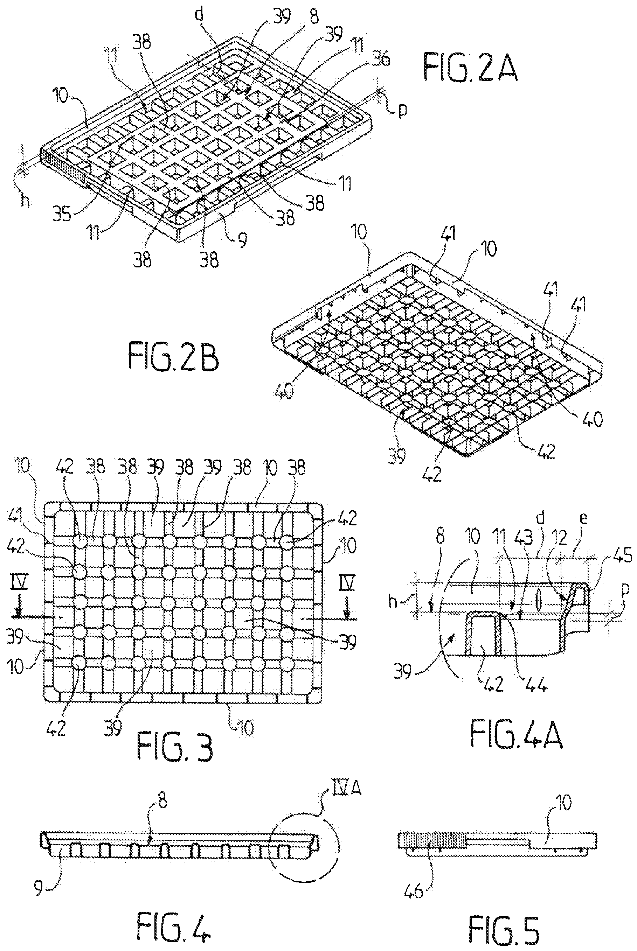

Le plateau (cf. figure 2A) comporte une rainure périphérique 11 formant un évidement ou ressaut par rapport à la face 8, de largeur $d$ et de profondeur $p$.

On notera que sur les figures 2A et 2B, la rainure 11 ne présente pas de parois continues et qu'elle jouxte la face interne 12 du bord 10 correspondant, mais peut également être plus à l'intérieur du plateau.

La profondeur $p$ et la largeur $d$ sont agencées pour permettre l'insertion d'un élément en biais (aile du déflecteur) qui sera détaillé ci-après.

En référence à l'étape 1, les colis 7 positionnés de manière quelconque sur la face supérieure 8 du plateau, sont amenés à un poste $P_1$ de référencement. Celui-ci fait face à un vérin pousseur 13, le plateau étant amené par un convoyeur 14, par exemple formé par un tapis ou un ensemble de rouleaux connus en eux-mêmes, le bord de hauteur $h$ du plateau étant situé du côté opposé au vérin 13.

Dans le mode de réalisation qui sera détaillé ci-après le plateau 9 a quatre bords de même hauteur ce qui fait que le plateau peut être positionné sur le convoyeur de façon non orientée et/ou différenciée.

Lors de cette étape 1, le plateau est référencé par rapport à l'extérieur, pour que la charge soit toujours vers l'intérieur du plateau par rapport à la rainure, dans le but de garantir l'absence d'interface avec la suite du système.

En d'autres termes et pour que la charge soit toujours du bon côté de la rainure, on va régler ici la position relative des colis 7 par rapport au plateau 9.

Pour ce faire le convoyeur 14 est équipé d'une butée 15 formée par une plaque rectangulaire verticale 16 installée parallèlement au sens de transfert du convoyeur 14.

Le vérin pousseur 13 est quant à lui équipé d'une tige 17 terminée par un tampon 18 agencé pour repousser le bord 19 du plateau opposé à la plaque selon la flèche 20, jusqu'à une position 21 de blocage du bord 10 par exemple le long d'un rail de guidage 22 en bordure du convoyeur.

La charge 7 étant en hauteur lorsque l'on pousse sur le plateau, et que la charge est mal placée, c'est à dire qu'elle mord par exemple sur la rainure du plateau, il y a glissement des colis occasionné par la mise en contact des colis avec la plaque 16.

Le plateau et plus précisément son bord latéral 10 passe alors en dessous du bord périphérique ou chant inférieur 23 de la plaque, pour atteindre sa position finale déterminée, c'est à dire ici en butée sur le rail 22.

Cette position délimite une distance $l$ (voir étape 3) qui garantit un jeu longitudinal entre le côté périphérique extérieur 24 des colis et le bord latéral 10 du plateau suffisant pour que les colis soient donc situés entièrement en dehors de la rainure, vers l'intérieur du plateau.

Les étapes référencées 1 et 2 ont donc permis de créer un jeu longitudinal suffisant entre les colis et le bord du plateau situé du côté de l'évacuation de la charge.

Celui-ci est par exemple réglable. Il correspond à la largeur du jeu nécessaire pour l'encastrement de l'aile inférieure du déflecteur, entre le bord du plateau et la charge et est tel que $l > d + e$ ou $e$ est la largeur du bord 10 proprement dit (voir figure 4A).

La plaque 16 par exemple métallique est fixe. Elle est de hauteur correspondant à la plus haute des charges et de longueur approximativement égale ou supérieure à celle du plateau avec un chant inférieur qui laisse donc passer par en dessous le bord 10 du plateau.

Une fois le glissement relatif des colis effectué (voir étape référencée 2), par exemple détecté par la venue en butée finale du bord opposé 23 du plateau sur le rail 22, le vérin 13 se rétracte et le plateau est alors transféré à la station ou poste suivant $P_2$, de déchargement, où l'extraction des colis va pouvoir s'effectuer via des moyens de déplacement.

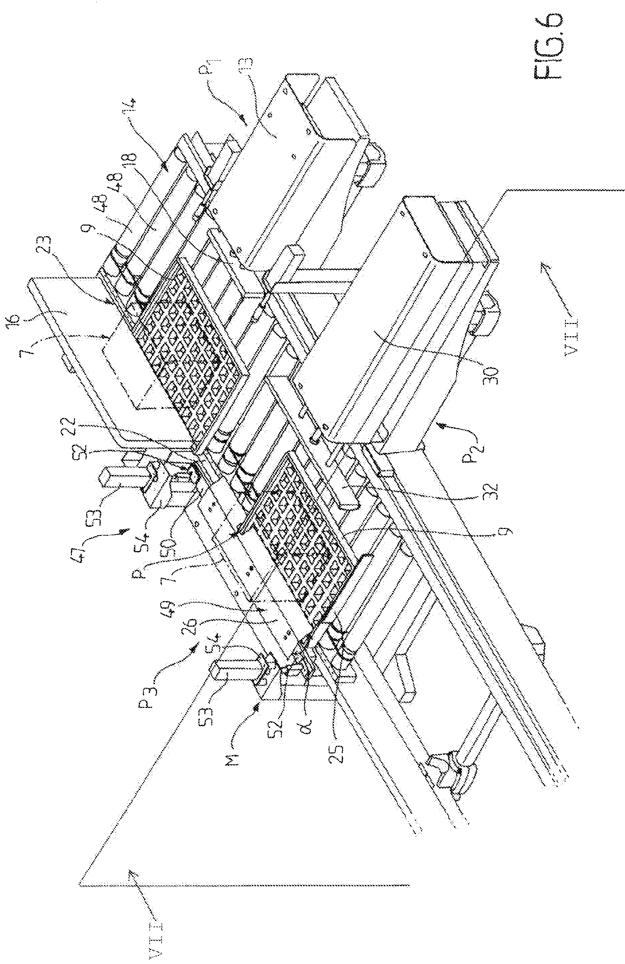

Le plateau est tout d'abord amené en position exacte en vis à vis du poste d'évacuation $P_3$ grâce à l'activation d'une butée 25 par exemple formée par une réglette s'étendant perpendiculairement au convoyeur 14 (voir figure 6).

On vient alors mettre en place le déflecteur mobile 26. Il s'agit d'une tôle en forme de cornière longitudinale allongée présentant une face ou aile supérieure horizontale et une face ou aile inférieure inclinée avec une pente par rapport à l'horizontal de l'ordre de 30°, ou formant un angle α entre les deux ailes de la cornière de l'ordre de 150° (à ± 10°).

Le déflecteur présente un bord inférieur définissant une arête 27.

Il est actionné entre une position haute 28 (voir étape 3 trait mixte) permettant d'échapper le bord latéral 10 du plateau et une position basse 29 (voir étape 4) dans laquelle l'arête 26 vient se positionner dans la rainure ou zone rainurée 11 du plateau.

Ceci permet d'éviter toute discontinuité entre le plan 8 du plateau 9 sur lequel repose la charge 7 et le déflecteur 26.

La profondeur p de la rainure est telle que l'arête 27 du pan incliné se retrouve sous le niveau du fond de la charge lors du transfert.

Dans le mode de réalisation plus particulièrement décrit ici on complète le mouvement de déplacement vertical du déflecteur entre sa position haute et sa position basse, par un mouvement initial et/ou final de basculement en rotation.

L'angle initial (position rentrée) du déflecteur est ainsi plus aigu que sa valeur prise en fin de mouvement, ce qui permet de réduire l'encombrement du système en position rentrée, tout en assurant au déflecteur une trajectoire dégageante vis à vis de la charge si par inadvertance celle-ci s'était déplacée.

Une fois le déflecteur en position, on pousse (étape 5) le colis via un vérin pousseur 30 muni d'un piston 31 terminé par un coussin 32, par exemple muni d'une légère excroissance 33 en partie basse, ce qui permet d'appliquer l'effort de poussée aussi bas que possible, pour mieux éviter les risques de basculement des colis.

Ceux-ci glissent sur le déflecteur, en remontant la pente, pour prendre position au poste $P_3$, sur le convoyeur connu en lui-même.

Le plateau 9 est quant à lui évacué en aval par le convoyeur 14.

On va maintenant décrire en référence aux figures 2 à 5, un exemple de plateau 9 utilisable avec l'invention.

Le plateau 9 est rectangulaire. Il est par exemple en matière plastique obtenu par injection et comprend un fond 35 muni d'une partie centrale rectangulaire 36 dont la surface forme la face supérieure 8 du plateau.

La partie centrale 36 est munie sur sa périphérie d'une zone en retrait 37 formant la rainure 11 pour l'encastrement du déflecteur, bordée vers l'extérieur par les quatre bords latéraux relevés 10, de hauteur h par rapport à la surface 8 du fond.

Dans ce mode de réalisation, le fond 35 comprenant la partie centrale 36 et les quatre rainures périphériques 11, est ajouré, en forme de caillebotis.

Il est formé de traverses ou poutres 38 qui s'entrecroisent régulièrement, en laissant entre elles des orifices rectangulaires 39 qui vont permettre la vidange automatique du fond du plateau en évitant toute rétention d'eau.

Plus précisément les bords 10 sont rectangulaires, évidés de l'intérieur en 40, avec des raidisseurs 41 de façon connue en elle-même, et sont agencés pour empêcher les charges de sortir de la surface du plateau en formant des butées ni trop hautes ni trop basses (par exemple de hauteur h comprise entre 10 et 20 mm) pour permettre une bonne mise en œuvre du procédé.

Des plots 42 de rigidification au niveau des entretoises sont prévus.

En référence à la figure 4A, on note la hauteur h des bords périphériques par rapport à la surface 8, la largeur d de la rainure 11 (par exemple comprise entre 30 et 50 mm), l'épaisseur p de la profondeur de ladite rainure ente la face supérieure 43 des poutres de fond de rainure et la surface 8 de la face supérieure (par exemple comprise entre 3 et 10 mm).

La longueur entre la périphérie 44 de la face supérieure 8 porteuse de colis et la face externe 45 du bord périphérique est égale à d + e avec d largeur de la rainure proprement dite entre périphérie 44 et face interne 12 du bord 10 et e épaisseur du bord 10 lui-même.

Plus précisément le plateau pouvant être assimilé à une plaque à bords relevés de hauteur déterminée, le choix de la hauteur choisie est, en fait, un compromis qui doit satisfaire à deux contraintes antinomiques :

- La hauteur de bord (profondeur inférieure ≈ 20 mm) doit être suffisamment importante pour éviter que la charge transportée quitte le plateau lors de son immobilisation (rôle de garde en fin de transfert).
- La hauteur doit être « limitée » car cette dimension impacte directement le taux de remplissage du plateau, défini comme le rapport de la base de la plus grande des charges à transporter sur la face interne du plateau. Idéalement se rapport doit tendre vers 1.

Considérons β = 30° (= 180° - α) comme étant l'angle de déflection,
si h = 20 mm (côté intérieur) est la hauteur à franchir pour extraire la charge du plateau, alors d (dimension correspondant à la largeur de la rainure, devant restée libre quelques soient les dimensions de la charge transportée) doit satisfaire à la relation :

$$d > \frac{h}{\tan \beta}$$

Dans un exemple de réalisation on choisit d = 40 mm, et on prévoit deux formats de plateaux rectangulaires (dans le but d'adapter au mieux les dimensions des charges transportées au plateau) et deux rainures latérales. Aussi et par exemple, dans le cas de grands plateaux (par exemple Dim. Ext = 660 x 460 mm²) les deux rainures sont réalisées suivant le grand côté des rectangles. Dans le cas de plus petits plateaux (Dim. Ext = 460 x 330 mm²) les rainures sont par contre réalisées suivant le petit côté.

A noter que les orifices pratiqués dans le fond du plateau ont pour seule fonction d'éviter la rétention de liquide généré par les têtes d'extinction automatique d'incendie (dispositif de sprinklage).

Avantageusement, la face externe 45 du bord 10, qui est droite et agencée pour coopérer avec le coussin pousseur 32, comporte des moyens visuels 46 (code barre par exemple) permettant le repérage et le suivi des plateaux tout au long du procédé.

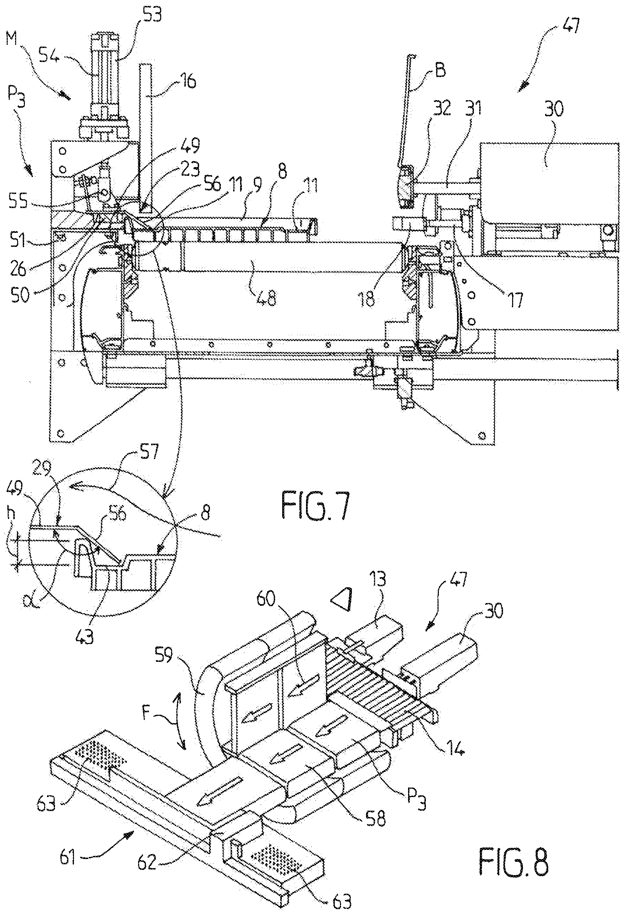

On a représenté sur les figures 6 et 7 le système 47 de déchargement de plateaux selon le mode de réalisation plus particulièrement décrit ici, en utilisant les mêmes numéros de référence pour désigner les mêmes éléments que pour les figures précédentes.

Ici le convoyeur 14 est formé de rouleaux motorisés 48 connus en eux-mêmes.

Les vérins 13 et 30 sont quant à eux et par exemple des vérins pneumatiques et le coussin 32 est avantageusement surmonté d'une plaque B fine, en léger biais, flexible, de rétention des colis pour éviter tout basculement s'il y avait lieu.

Selon l'invention plus particulièrement décrite ici, le système comprend des moyens M de déplacement de la cornière 26 verticalement et en basculement.

Celle-ci comprend une aile rectangulaire 49 horizontale fixée sur une poutre 50 solidaire du châssis 51 du poste $P_3$.

La poutre 50 est fixée à chacune de ses extrémités 52 à deux poteaux 53 munis de moyens moteurs 54 d'actionnement en vertical (vérins) et en rotation autour d'un axe 55 par pivotement par exemple à came (non représentée).

La cornière 26 comprend une deuxième aile rectangulaire 56 solidaire et formant l'angle $\alpha$ de l'ordre de 150° avec la première aile et est agencée pour venir s'encastrer dans la rainure 11, autorisant alors le glissement et la remontée des charges selon la flèche 57 lors de l'extraction, comme décrit précédemment.

Il est prévu, si nécessaire dans le cas de l'utilisation de plateaux de longueurs différentes, et en fonction des longueurs des plateaux, une fente P permettant le passage du bord orthogonal 10 du plateau le plus petit.

La figure 8 montre le système 47 d'alimentation et de déchargement pour transfert des colis en amont du poste d'évacuation $P_3$ avant traitement ultérieur.

Celui-ci comprend un tapis ou convoyeur 58, éventuellement monté de façon connue en elle-même sur un arceau 59 basculant entre deux positions perpendiculaires l'une de l'autre, de façon à permettre s'il y a lieu, le retournement des colis (flèche F).

Le convoyeur 58 (flèche 60) amène alors les colis au dispositif 61 de séparation des colis de part et d'autre, par des moyens pousseurs 62, vers deux postes symétriques 63 de reprise ultérieure des colis par exemple, par des pinces de préhension automatisée.

On va maintenant décrire en référence aux figures 1A et 1B l'utilisation du système et du procédé de déchargement selon le mode de réalisation de l'invention plus particulièrement invoqué.

Les colis 7 ont tout d'abord été disposés sur des plateaux 9 de façon aléatoire. Ils sont constitués de produits de formes différentes, dont les centres de gravité sont plus ou moins hauts.

Il s'agit par exemple de packs de bouteilles, de boîtes de lessive etc....

Les plateaux arrivent ensuite successivement au poste $P_1$ de recadrage selon un diagramme de temps programmé en fonction des besoins, de façon à la portée de l'homme du métier.

Le plateau est alors immobilisé au poste $P_1$ par exemple par l'arrêt du convoyeur.

On vient ensuite pousser le plateau 9 en butée contre le rail 22 à l'aide du vérin pousseur 13.

La plaque 16 joue ici un rôle de blocage des colis et maintient s'il y a lieu ces derniers en dehors de la rainure 11.

Le convoyeur 14, arrêté pour permettre le positionnement des colis lors du point fixe ci-dessus, est alors redémarré.

Le plateau, avec les colis en position de référence, quitte l'espace en face de la plaque 16 et vient se positionner au poste $P_2$, situé en face du poste $P_3$ par blocage de la réglette 25 d'évacuation.

Le plateau et les colis étant positionnés et cadrés le long du rail 22, on descend la cornière 26, préalablement soulevée de façon à permettre au bord du plateau de passer en dessous.

La cornière est alors légèrement pivotée, descendue puis mise en place dans la rainure 11 en vis à vis.

Le vérin 30 est actionné et vient pousser les produits sur la cornière. Ceux-ci remontent sous l'effet de la pression avant de se placer (cf. étape 5 de la figure 1B) sur le convoyeur de reprise du poste $P_3$ (6 ou 58).

Entre temps, et en temps masqué, les opérations référencées 1 et 2 ayant été effectuées pour le plateau suivant, celui-ci peut prendre la position face au vérin 30 et ainsi de suite.

Comme il va de soi et comme il résulte également de ce qui précède, la présente invention n'est pas limitée aux modes de réalisation plus particulièrement décrits. Elle en embrasse au contraire toutes les variantes et notamment celles où il est prévu d'autres moyens de taquage/blocage des colis dans la position de référence nécessaire à une bonne mise en place des produits et remontées de ces derniers le long de la cornière 26.

## Revendications

1. Procédé de déchargement sur un poste d'évacuation ($P_3$) de colis (7) préalablement déposés sur la face supérieure (8) d'au moins un plateau (9) présentant au moins un bord latéral (10), le plateau (9) comportant une rainure périphérique (11) jouxtant ledit bord, le procédé comportant les étapes suivantes: on place le plateau sur un convoyeur (14) avec ledit bord latéral (10) du côté du poste d'évacuation (P₃), on règle la position relative des colis (7) par rapport au plateau (9) pour que les colis soient situés sur la face supérieure (8) du plateau entièrement à l'extérieur de ladite rainure (11), on déplace le plateau (9) devant le poste d'évacuation (P₃) équipé à sa jonction avec le convoyeur d'un déflecteur (26) mobile en forme de cornière présentant une aile (56) inclinée vers le bas d'un angle α, ledit déflecteur (26) étant en position haute (28) permettant d'échapper le bord latéral (10) du plateau, on déplace ledit déflecteur (26) vers une position basse (29) de sorte que l'arête (27) de l'aile inclinée vienne s'encastrer dans ladite rainure (11) en dessous de la face supérieure (8) du plateau et on pousse les colis (7) latéralement sur le déflecteur (26) jusqu'à complet transfert sur ledit poste d'évacuation (P₃) .

2. Procédé selon la revendication 1, **caractérisé en ce que** on décharge successivement plusieurs plateaux (9), le transfert des colis (7) d'un premier plateau sur le poste d'évacuation (P₃) s'effectuant pendant le règlement de la position relative des colis sur un deuxième plateau préalablement placé à la suite du premier sur le convoyeur (14) et ainsi de suite pour les plateaux suivants.

3. Procédé selon l'une quelconque des revendications précédentes, **caractérisé en ce que**, pour régler la position relative des colis (7) par rapport au plateau (9), le convoyeur (14) étant équipé d'une butée (15) située du côté du poste d'évacuation (P₃), on référence en dynamique le plateau (9) du côté opposé à la butée, pour garantir l'absence d'interférence entre les colis et ladite butée, et on repousse le plateau (9) vers la butée (15) par le biais d'un actionneur mécanique (13) en extension jusqu'à une position finale déterminée, pour provoquer s'il y a lieu le glissement des colis sur le plateau occasionné par la mise en contact des colis (7) avec la butée (15) tout en garantissant ainsi un jeu longitudinal entre les colis et le bord latéral (10) du plateau suffisant pour que lesdits colis soient entièrement situés à l'extérieur de la rainure (11) en position finale.

4. Procédé selon la revendication 3, **caractérisé en ce qu'**on détecte la position finale déterminée du plateau (9), ladite détection provoquant le retrait de l'actionneur et le transfert du plateau en vis à vis du poste d'évacuation (P₃).

5. Procédé selon l'une quelconque des revendications précédentes, **caractérisé en ce que** on déplace le déflecteur (26) entre sa positon haute (28) et sa position basse (29), et inversement, par un mouvement vertical complété par un mouvement initial et/ou final de basculement en rotation, de façon à réduire l'encombrement et permettre un dégagement accru de la cornière (26) vis à vis du plateau et des colis qu'il supporte.

6. Procédé selon l'une quelconque des revendications précédentes, **caractérisé en ce que** l'angle α est compris entre 140° et 170°.

7. Procédé selon la revendication 3, **caractérisé en ce que** l'angle α est de l'ordre de 150°.

8. Procédé selon l'une quelconque des revendications précédentes, **caractérisé en ce que**, h étant la hauteur du bord par rapport à la face supérieure du plateau, et d la largeur de la rainure périphérique, d ≥ h/tg β avec β = 180° - α.

9. Système (47) de déchargement sur un poste d'évacuation (P₃) de colis (7) comprenant au moins un plateau (9) comportant une face supérieure (8) de support de colis et présentant au moins un bord latéral (10) relevé d'hauteur h, le plateau (9) comportant une rainure (11) périphérique de largeur d et de profondeur p, jouxtant ledit bord,

le système (47) comportant de plus un convoyeur (14) agencé pour transférer le plateau (9) avec son bord latéral (10) situé du côté du poste d'évacuation (P₃) vers une position en vis à vis dudit poste d'évacuation,

des premiers moyens (13) actionneurs du déplacement transversal du plateau (9) en dynamique,

des moyens (15) de butée du plateau du côté du poste d'évacuation,

les dits premiers moyens (13) actionneurs et lesdits moyens (15) de butée étant agencés pour régler la position relative des colis par rapport au plateau pour que les colis (7) soient toujours situés sur la face supérieure (8) du plateau entièrement à l'extérieur de ladite rainure (11),

ledit convoyeur (14) étant agencé pour déplacer ensuite le plateau devant le poste d'évacuation,

un déflecteur mobile (26) situé à la jonction entre le poste d'évacuation (P₃) et le convoyeur (14), ledit déflecteur (26) étant en forme de cornière présentant une aile (56) inclinée vers le bas d'un angle α,

des moyens (M) de déplacement de ladite cornière entre une position haute (28) permettant d'échapper le bord latéral (10) du plateau, et une position basse (29) agencés pour permettre l'encastrement de l'arête (27) de l'aile inclinée dans ladite rainure en dessous de la face supérieure (8) du plateau et

des moyens (30) de poussée agencés pour pousser des colis latéralement sur le déflecteur (26) jusqu'à complet transfert sur ledit poste d'évacuation.

10. Système selon la revendication 9, **caractérisé en ce que** la butée (15) est une plaque (16) verticale rectangulaire fixe, de hauteur déterminée H, de longueur égale ou sensiblement égale à celle du plateau (9) présentant un bord inférieur (23) situé à une distance e par rapport à la face supérieure du convoyeur supérieure à la hauteur du plateau.

**11.** Système selon l'une quelconque des revendications 9 et 10, **caractérisé en ce que** les moyens de déplacement de la cornière (26) entre sa positon haute (28) et sa position basse (29) comprennent des moyens (M) d'actionnement vertical de la cornière et des moyens de basculement en rotation de ladite cornière, de façon à réduire l'encombrement et permettre un dégagement accru de la cornière vis à vis du plateau et des colis qu'il supporte.

**12.** Système selon l'une quelconque des revendications 9 à 11, **caractérisé en ce que** l'angle α est compris entre 140° et 170°.

**13.** Système selon la revendication 12, **caractérisé en ce que** l'angle α est de l'ordre de 150°.

**14.** Système selon l'une quelconque des revendications 9 à 13, **caractérisé en ce que** :

$$d \geq h/tg \ \beta$$

avec d : largeur de la rainure,
h : hauteur du bord par rapport à la face supérieure du plateau et β = 180° - α.

**15.** Système selon l'une quelconque des revendications 9 à 14, **caractérisé en ce que** le plateau (9) est ajouré par des orifices (39) régulièrement répartis.


**Patentansprüche**

**1.** Verfahren zum Entladen von Paketen (7), die vorher auf die Oberseite (8) mindestens einer, einen Seitenrand (10) aufweisenden Platte (9) abgelegt wurden, an eine Ausleitstation (P₃), wobei die Platte (9) eine Umfangsnut (11) angrenzend an den Rand aufweist, wobei das Verfahren die folgenden Schritte umfasst:

die Platte wird auf einem Förderer (14) mit dem Seitenrand (10) zur Ausleitstation (P₃) gerichtet angeordnet,
die relative Position der Pakete (7) in Bezug auf die Platte (9) wird eingestellt, damit die Pakete auf der Oberseite (8) der Platte vollständig außerhalb der Nut (11) liegen,
die Platte (9) wird vor die Ausleitstation (P₃) bewegt, die an ihrer Verbindungsstelle mit dem Förderer mit einem mobilen Ablenkelement (26) in Form eines Winkelelementes, das einen um einen Winkel α nach unten gerichteten Schenkel aufweist, ausgerüstet ist, wobei das Ablenkelement (26) in einer angehobenen Position (28) ist, die ermöglicht, sich dem Seitenrand (10) der Platte zu entziehen,
das Ablenkelement (26) wird zu einer abgesenkten Position (29) bewegt, derart dass die Kante (27) des geneigten Schenkels sich in die Nut (11) unter der Oberseite (8) der Platte eingefügt und
die Pakete (7) werden seitlich auf dem Ablenkelement (26) bis zur vollständigen Übergabe an die Ableitstation (P₃) verschoben.

**2.** Verfahren nach Anspruch 1, **dadurch gekennzeichnet, dass** aufeinanderfolgend mehrere Platten (9) entladen werden, wobei die Übergabe der Pakete (7) einer ersten Platte an die Ausleitstation (P₃) während des Einstellens der relativen Position der Pakete auf einer zweiten Platte, die vorher nachfolgend zu der ersten auf den Förderer (14) platziert wurde, durchgeführt wird und so weiter.

**3.** Verfahren nach einem beliebigen der vorhergehenden Ansprüche, **dadurch gekennzeichnet, dass**, um die relative Position der Pakete (7) in Bezug auf die Platte (9) einzustellen, der Förderer (14) mit einem Anschlag (15), der an der Seite der Ausleitstation (P₃) liegt, ausgerichtet ist,
die Platte (9) an der dem Anschlag gegenüberliegenden Seite dynamisch referenziert wird, um das Ausbleiben einer Störung zwischen den Paketen und dem Anschlag zu garantieren, und
die Platte (9) durch ein ausfahrbares mechanisches Betätigungselementes (13) zu dem Anschlag (15) bis zu einer vorbestimmten Endposition geschoben wird, um gegebenenfalls das Gleiten der Pakete auf der Platte, das durch das Kontaktieren der Pakete (7) mit dem Anschlag (15) ausgelöst wird, zu bewirken, wobei dabei ein Längsspiel zwischen den Paketen und dem Seitenrand (10) der Platte garantiert wird, das ausreicht, damit die Pakete in der Endposition vollständig außerhalb der Nut (11) liegen.

**4.** Verfahren nach Anspruch 3, **dadurch gekennzeichnet, dass** die bestimmte Endposition der Platte (9) detektiert wird, wobei das Detektieren das Zurückziehen des Betätigungselementes und die Übergabe der Platte gegenüberliegend zur Ausleitstation (P₃) bewirkt.

**5.** Verfahren nach einem beliebigen der vorhergehenden Ansprüche, **dadurch gekennzeichnet, dass** das Ablenkelement (26) zwischen seiner angehobenen Position (28) und seiner abgesenkten Position (29) durch eine vertikale Bewegung, die durch eine Anfangs- und/oder Endbewegung des Drehkippens ergänzt wird, bewegt wird und umgekehrt, um den Platzbedarf zu verringern und eine verbesserte Freigabe des Winkelelementes (26) gegenüber der Platte und der Pakete, die sie trägt, zu ermöglichen.

6. Verfahren nach einem beliebigen der vorhergehenden Ansprüche, **dadurch gekennzeichnet, dass** der Winkel α zwischen 140° und 170° liegt.

7. Verfahren nach Anspruch 3, **dadurch gekennzeichnet, dass** der Winkel α in der Größenordnung von 150° liegt.

8. Verfahren nach einem beliebigen der vorhergehenden Ansprüche, **dadurch gekennzeichnet, dass** mit h als Höhe des Randes in Bezug auf die Oberseite der Platte und d als Breite der Umfangsnut d ≥ h/tgβ mit β = 180° - α.

9. System (47) zum Entladen von Paketen (7) an eine Ausleitstation (P₃), das mindestens eine Platte (9) umfasst, die mindestens eine Oberseite (8) zum Abstützen von Paketen aufweist und mindestens einen mit einer Höhe h angehobenen Seitenrand (10) aufweist, wobei die Platte (9) angrenzend an den Rand eine Umfangsnut (11) der Breite d und der Tiefe p aufweist, wobei das System (47) außerdem umfasst:

einen Förderer (14), der ausgebildet ist, die Platte (9) mit ihrem zur Ausleitstation (P₃) gerichteten Seitenrand (10) in eine Position gegenüberliegend zur Ausleitstation zu überstellen,
erste Betätigungsmittel (13) der dynamischen Querverschiebung der Platte,
Anschlagmittel (15) der Platte an der Seite der Ausleitstation, wobei
die ersten Betätigungsmittel (13) und die Anschlagmittel (15) ausgebildet sind, die relative Position der Pakete in Bezug auf die Platte (9) einzustellen, damit die Pakete (7) immer auf der Oberseite (8) der Platte vollständig außerhalb der Nut (11) liegen,
der Förderer (14) ausgebildet ist, dann die Platte vor die Ausleitstation zu bewegen,
ein mobiles Ablenkelement (26), das an der Verbindungsstelle zwischen der Ausleitstation (P₃) und dem Förderer (14) liegt, wobei das Ablenkelement (26) in Form eines Winkelelementes ausgebildet ist, das einen um einen Winkel α nach unten gerichteten Schenkel aufweist,
Mittel (M) zum Bewegen des Winkelelementes zwischen einer angehobenen Position (28), die ermöglicht, sich dem Seitenrand (10) der Platte zu entziehen, und einer abgesenkten Position (29), die eingerichtet sind, die Einbettung der Kante (27) des geneigten Schenkels in die Nut unter der Oberseite (8) der Platte zu ermöglichen und
Schubmittel (30), die eingerichtet sind, die Pakete (7) seitlich auf das Ablenkelement (26) bis zur vollständigen Übergabe an die Ableitstation zu schieben.

10. System nach Anspruch 9, **dadurch gekennzeichnet, dass** der Anschlag (15) eine feststehende vertikale, rechteckige Tafel (16) von festgelegter Höhe H und einer Länge gleich oder im Wesentlichen gleich der der Platte (9), die einen unteren Rand (23) aufweist, der in einem Abstand e in Bezug auf die Oberseite des Förderers größer als die Höhe der Platte liegt.

11. System nach einem beliebigen der Ansprüche 9 und 10, **dadurch gekennzeichnet, dass** die Mittel zum Bewegen des Winkelelementes (26) zwischen seiner angehobenen Position (28) und seiner abgesenkten Position (29) Mittel (M) zur vertikalen Betätigung des Winkelelementes und Mittel zum Drehkippen des Winkelelementes umfassen, um den Platzbedarf zu verringern und eine verbesserte Freigabe des Winkelelementes gegenüber der Platte und der Pakete, die sie trägt, zu ermöglichen.

12. System nach einem beliebigen der Ansprüche 9 bis 11, **dadurch gekennzeichnet, dass** der Winkel α zwischen 140° und 170° liegt.

13. System nach Anspruch 12, **dadurch gekennzeichnet, dass** der Winkel α in der Größenordnung von 150° liegt.

14. System nach einem beliebigen der Ansprüche 9 bis 13, **dadurch gekennzeichnet, dass**

$$d \geq h/tg\beta$$

mit d: Breite der Nut,
h: Höhe des Randes in Bezug auf die Oberseite der Platte und
β = 180° - α.

15. System nach einem beliebigen der Ansprüche 9 bis 14, **dadurch gekennzeichnet, dass** die Platte (9) mit regelmäßig verteilten Öffnungen (39) durchbrochen ist.

**Claims**

1. Method for unloading onto a removal station (P₃) packages (7) which have previously been deposited on the upper face (8) of at least one tray (9) having at least one lateral edge (10), the tray (9) having a peripheral groove (11) adjacent to said edge, the method comprising the following steps: the tray is placed on a conveyor (14) with said lateral edge (10) on the removal station (P₃) side, the relative position of the packages (7) with respect to the tray (9) is adjusted so that the packages are situated on the upper face (8) of the tray wholly outside said groove (11), the tray (9) is moved in front of the removal station ($P_3$) equipped, at its junction with the conveyor, with a movable deflector (26) in the form of an angle-piece having a wing (56) inclined downwards at an angle $\alpha$, said deflector (26) being in a top position (28) in which it is out of the way of the lateral edge (10) of the tray, said deflector (26) is moved into a bottom position (29) so that the edge (27) of the inclined wing fits into said groove (11) beneath the upper face (8) of the tray, and the packages (7) are pushed sideways onto the deflector (26) until they are transferred completely to said removal station ($P_3$).

2. Method according to claim 1, **characterised in that** a plurality of trays (9) are unloaded in succession, the transfer of the packages (7) from a first tray to the removal station ($P_3$) taking place during the adjustment of the relative position of the packages on a second tray previously placed on the conveyor (14) behind the first tray, and so on for the following trays.

3. Method according to any one of the preceding claims, **characterised in that**, in order to adjust the relative position of the packages (7) with respect to the tray (9), the conveyor (14) being equipped with a stop (15) situated on the removal station ($P_3$) side, the tray (9) is dynamically indexed on the side opposite the stop in order to ensure the absence of interference between the packages and said stop, and the tray (9) is pushed towards the stop (15) by way of an extending mechanical actuator (13) to a given final position, in order to cause, if necessary, the packages to slide on the tray as a result of contact of the packages (7) with the stop (15), thus ensuring a sufficient longitudinal play between the packages and the lateral edge (10) of the tray that said packages are situated wholly outside the groove (11) in the final position.

4. Method according to claim 3, **characterised in that** the given final position of the tray (9) is detected, said detection causing the actuator to be retracted and the tray to be transferred opposite the removal station ($P_3$).

5. Method according to any one of the preceding claims, **characterised in that** the deflector (26) is displaced between its top position (28) and its bottom position (29), and *vice versa,* by a vertical movement combined with an initial and/or final tilt and turn movement, so as to reduce the space required and permit an increased clearance of the angle-piece (26) relative to the tray and the packages which it supports.

6. Method according to any one of the preceding claims, **characterised in that** the angle $\alpha$ is between 140° and 170°.

7. Method according to claim 3, **characterised in that** the angle $\alpha$ is approximately 150°.

8. Method according to any one of the preceding claims, **characterised in that**, h being the height of the edge relative to the upper face of the tray, and d the width of the peripheral groove, $d \geq h/tg\ \beta$, where $\beta = 180° - \alpha$.

9. System (47) for unloading packages (7) onto a removal station ($P_3$), comprising at least one tray (9) having an upper face (8) for supporting packages and having at least one raised lateral edge (10) of height h,
   the tray (9) having a peripheral groove (11) of width d and depth p, adjacent to said edge,
   the system (47) further comprising

   a conveyor (14) arranged to transfer the tray (9) with its lateral edge (10) situated on the removal station ($P_3$) side to a position opposite said removal station,
   first actuating means (13) for the dynamic transverse displacement of the tray (9),
   stop means (15) for the tray on the removal station side,
   said first actuating means (13) and said stop means (15) being arranged to adjust the relative position of the packages with respect to the tray so that the packages (7) are always situated on the upper face (8) of the tray wholly outside said groove (11),
   said conveyor (14) being arranged to subsequently displace the tray in front of the removal station,
   a movable deflector (26) situated at the junction between the removal station ($P_3$) and the conveyor (14), said deflector (26) being in the form of an angle-piece having a wing (56) inclined downwards at an angle $\alpha$,
   means (M) for displacing said angle-piece between a top position (28) in which it is out of the way of the lateral edge (10) of the tray and a bottom position (29) arranged to allow the edge (27) of the inclined wing to fit into said groove beneath the upper face (8) of the tray, and
   pushing means (30) arranged to push packages sideways onto the deflector (26) until they are transferred completely to said removal station.

10. System according to claim 9, **characterised in that** the stop (15) is a fixed vertical rectangular plate (16) having a given height H, having a length equal to or substantially equal to that of the tray (9) having a lower edge (23) situated at a distance $\underline{e}$ relative to the upper face of the conveyor which is greater than the height of the tray.

11. System according to either claim 9 or claim 10, **characterised in that** the means for displacing the angle-piece (26) between its top position (28) and its bottom position (29) comprise means (M) for vertical actuation of the angle-piece and means for tilting and turning said angle-piece, so as to reduce the space required and permit an increased clearance of the angle-piece relative to the tray and the packages which it supports.

12. System according to any one of claims 9 to 11, **characterised in that** the angle $\alpha$ is between 140° and 170°.

13. System according to claim 12, **characterised in that** the angle $\alpha$ is approximately 150°.

14. System according to any one of claims 9 to 13, **characterised in that**:

$$d \geq h/tg\ \beta$$

where $\underline{d}$: width of the groove,
$\underline{h}$: height of the edge relative to the upper face of the tray, and $\beta = 180° - \alpha$.

15. System according to any one of claims 9 to 14, **characterised in that** the tray (9) is perforated with evenly distributed orifices (39).

FIG.1A

FIG.1B

FIG.2A

FIG.2B

FIG.3

FIG.4A

FIG.4

FIG.5

FIG.6

FIG.7

FIG.8

## RÉFÉRENCES CITÉES DANS LA DESCRIPTION

**Documents brevets cités dans la description**

- FR 2567425

- DE 9211139 U